# EUROPÄISCHE PATENTSCHRIFT

(11) **EP 3 655 351 B1**
(45) Veröffentlichungstag und Bekanntmachung des Hinweises auf die Patenterteilung: **12.03.2025**
(21) Anmeldenummer: 18743739.7
(22) Anmeldetag: 16.07.2018
(51) Int. Cl.: B65G 47/51, B65G 1/137, B65G 37/02, B65G 1/04, B07C 5/36

(54) **KOMMISSIONIERANLAGE ZUM KOMMISSIONIEREN VON UNTERSCHIEDLICHEN, INSBESONDERE HÄNGEND TRANSPORTIERBAREN WAREN, SOWIE VERFAHREN ZUM BETRIEB EINER SOLCHEN KOMMISSIONIERANLAGE**
ORDER-PICKING INSTALLATION FOR THE ORDER PICKING OF DIFFERENT ITEMS, IN PARTICULAR ITEMS WHICH CAN BE TRANSPORTED IN A HANGING STATE, AND METHOD FOR OPERATING SUCH AN ORDER-PICKING INSTALLATION
INSTALLATION DE PRÉPARATION DE COMMANDES POUR LA PRÉPARATION DE DIFFÉRENTES MARCHANDISES COMMANDÉES POUVANT EN PARTICULIER ÊTRE TRANSPORTÉES EN SUSPENSION, AINSI QUE PROCÉDÉ POUR FAIRE FONCTIONNER LADITE INSTALLATION DE PRÉPARATION DE COMMANDES

(30) Priorität: 20.07.2017 CH 9472017
(43) Veröffentlichungstag der Anmeldung: 27.05.2020
(73) Patentinhaber: FERAG AG, 8340 Hinwil (CH)
(72) Erfinder: SIGRIST, Sergio, 8340 Hinwil (CH); LÓPEZ, Francisco Javier, 8630 Rüti (CH)
(74) Vertreter: Rentsch Partner AG
(86) Internationale Anmeldenummer: PCT/EP2018/069214
(87) Internationale Veröffentlichungsnummer: WO 2019/016120

(56) Entgegenhaltungen:
- WO-A1-2013/029192
- WO-A2-01/47792
- DE-A1- 102011 103 194
- DE-C1- 10 039 394
- DE-T2- 69 500 497
- DE-T2- 69 501 159

## Beschreibung

### TECHNISCHES GEBIET

Die vorliegende Erfindung bezieht sich auf das Gebiet der Logistik. Sie betrifft eine Kommissionieranlage zum Kommissionieren von unterschiedlichen, insbesondere hängend transportierbaren Waren, gemäss dem Oberbegriff des Anspruchs 1.

Sie betrifft weiterhin ein Verfahren zum Betrieb einer solchen Kommissionieranlage.

### STAND DER TECHNIK

Im Zuge der zunehmenden Warenströme und der sich ändernden Art der Warenverteilung und -versorgung nehmen Probleme und Lösungen der Logistik einen immer breiteren Raum ein. Die in grossen Lagern, insbesondere auch Hochregallagern eingelagerten und vorgehaltenen Waren sollen möglich zeitnah zum Auftrag ausgespeichert, zu Warensendungen zusammengestellt und ausgeliefert werden. Ein wichtiger Teilbereich dieses Warenumschlags ist die Kommissionierung, d.h. das Zusammenstellen von bestimmten Teilmengen (Artikeln) aus einer bereitgestellten Gesamtmenge (Sortiment) aufgrund von Aufträgen. Dabei kann es sich um einen Kundenauftrag oder auch um einen Produktionsauftrag handeln.

Im Stand der Technik gibt es eine Vielzahl von Lösungsvorschlägen zu Problemen der Kommissionierung.

Die Druckschrift DE 4335637 C1 offenbart Sortieranlage zum Sortieren von Einzelstücken über Sammelzonen und Staulinien, die mit einer Stetigfördereinrichtung verbunden sind, mit einem Lesegerät als Bestandteil einer Steuerungseinrichtung zum Lesen einer bestimmte Identifikationsmerkmale verschlüsselnden Identnummer an einem zu sortierenden Einzelstück; Umlenkeinrichtungen vor den Staulinien und einer oder mehreren Ausschleusstellen innerhalb einer Ausschleuseinrichtung nach den Sammelzonen, gekennzeichnet durch die folgenden Merkmale: (a) eine Zuordnungseinrichtung als Bestandteil einer Steuerungseinrichtung für die Zuordnung der Identnummer zu einer Platzhalternummer, die die gewünschte Position im Strom der Einzelstücke in den folgenden Sammelzonen, Staulinien und Ausschleusstellen enthält; (b) eine der/den Chargengrösse(n) der zu sortierenden Einzelstücke angepasste erste Sammelzone zur Aufnahme aller mit einer Platzhalternummer versehenen Einzelstücke einer oder mehrerer Chargen, wobei die erste Sammelzone m Staulinien für die Einzelstücke gemäss einem ersten Bestandteil der Platzhalternummer, das ein Vorsortierungsmerkmal ist, enthält, wobei jede Staulinie eine Aufnahmekapazität q für den zu sortierenden Gegenstand hat und m und q ganze Zahlen sind; (c) eine zweite, dritte und vierte Sammelzone mit einer Anzahl von n Staulinien in jeder Sammelzone gemäss einem zweiten, dritten und vierten Bestandteil der Platzhalternummer, das jeweils ein weiter differenzierendes Vorsortiermerkmal ist, wobei die Staulinien eine jeweilige Aufnahmekapazität r haben, und n und r ganze Zahlen sind; (d) Steuerungselemente als Bestandteil einer Steuerungseinrichtung mit einer Abgrenzung der eingelesenen Einzelstücke dergestalt, dass die zahlenmässig konstant grosse Charge die entsprechende Anzahl Einzelstücke enthält, die in einer vorgegebenen Reihenfolge aus der Sortieranlage abfliessen, und einer Blockierung nach Aufnahme von q = n<3> Einzelteilen in jeder einzelnen Staulinie in der ersten Sammelzone und nach Aufnahme von r = n<2> Einzelstücke in jeder einzelnen Staulinie in der zweiten, dritten oder vierten Sammelzone; (e) nach der vierten Sammelzone eine Ausschleusungseinrichtung für die vorsortierten Einzelstücke mit einer zweiten Zuordnungseinrichtung als Bestandteil der Steuerungseinrichtung für die Zuordnung der Platzhalternummer zu der bestimmten Ausschleusstelle, die dem vorgegebenen fünften Bestandteil der Platzhalternummer entspricht; wobei (f) die Anzahl m der Staulinien in der ersten Sammelzone, das Fassungsvermögen q einer Staulinie in der ersten Sammelzone, die Anzahl n der Staulinien in jeder weiteren Sammelzone, das Fassungsvermögen r der Staulinien in den weiteren Sammelzonen zu der Sortieranlagenkonfiguration M in einer bestimmten Beziehung stehen.

Die Druckschrift EP 582224 A1 zeigt ein Verfahren zum Sortieren einer Mehrzahl einzeln geförderter Gegenstände in einer Hängefördereinrichtung, wobei die Gegenstände unsortiert auf einem ersten Förderkreis umlaufen und von dort einzeln und selbsttätig auf wenigstens einen zweiten Förderweg übergeben und zu Gruppen zusammengestellt werden, wobei der zweite Förderweg als zweiter Förderkreis ausgebildet ist, auf dem die Gegenstände umlaufen, und wobei zwischen dem ersten und dem zweiten Förderkreis eine selbsttätig schaltbare Weiche angeordnet wird.

Die Druckschrift DE 9406061 U1 offenbart eine Sortieranlage zum Sortieren von einzeln geförderten Gegenständen, insbesondere eine Hängeförderanlage, mit zwei die ihrer Reihenfolge nach zu sortierenden Gegenstände fördernden, gegenläufig umlaufenden Förderkreisen, zwischen denen eine selbsttätig schaltbare Weichenanordnung vorgesehen ist, mit welcher die Gegenstände einzeln von dem einen Förderkreis auf den anderen Förderkreisüberführbar sind. Die beiden Förderkreise sind als Förderkreispaar beidseitig einer zusätzlichen Förderstrecke angeordnet, deren Förderrichtung mit denen der Förderkreise in Höhe der Weichenanordnung übereinstimmt, und die Weichenanordnung ist für ein Überführen der Gegenstände wahlweise von der Förderstrecke auf jeden der Förderkreise und von jedem der Förderkreise auf die Förderstrecke ausgebildet.

In dieser Weise können die auf der Förderstrecke unsortiert ankommenden Gegenstände über die Weichenanordnung zum Beispiel selektiv und wahlweise auf einen der beiden Förderkreise übergeben werden und dort beispielsweise in Gruppen gesammelt werden, wonach die Gruppen nacheinander nach Gruppen sortiert wieder auf die Förderstrecke überführt werden. Durch selektive Überführung der Gegenstände von dem einen Förderkreis auf den anderen Förderkreis, von diesem zurück auf den ersten Förderkreis oder auf die Förderstrecke lassen sich zahlreiche zusätzliche Sortierkriterien erfüllen, beispielsweise die Reihenfolge der Gegenstände innerhalb der Gruppen ändern. Es ist auch möglich, die Gegenstände auf der Förderstrecke selektiv die Weichenanordnung passieren zu lassen, ohne sie auf den einen oder anderen Förderkreis zu überführen.

Eine ähnliche Sortieranlage ist aus der Druckschrift WO 95/27672 A1 bekannt.

Die Druckschrift DE 10039394 C1 beschreibt eine Sortieranlage zum Sortieren einer Mehrzahl von Objekten in wenigstens drei Sortierläufen, mit: einer Eingabestation zum Eingeben der zu sortierenden Objekte in die Sortieranlage; einer Ausgabestation zum Ausgeben der zu sortierenden Objekte aus der Sortieranlage; und einer Mehrzahl von Staustrecken, auf welchen die Objekte jeweils aufgestaut werden, bis ein jeweiliger Sortierlauf abgeschlossen ist. Sie zeichnet sich aus durch eine Aufteilung der Staustrecken auf einen ersten und einen zweiten Block von Staustrecken; eine erste Transportstrecke, welche die Eingabestation mit dem ersten Block von Staustrecken derart verbindet, dass diese von der Eingabestation in einem ersten Sortierschritt befüllbar sind; eine zweite Transportstrecke, welche den ersten Block mit dem zweiten Block derart verbindet, dass die Objekte in einem zweiten Sortierlauf direkt von dem ersten Block in den zweiten Block übergeben werden; und eine dritte Transportstrecke, welche den zweiten Block mit dem ersten Block derart verbindet, dass die Objekte in einem dritten Sortierlauf direkt von dem zweiten Block zurück in den ersten Block übergeben werden.

Die Druckschrift DE 20103664 U1 offenbart ein Fördersystem für Artikel in einem Lager, die auf mit Haken versehenen Trägern, insbesondere Kleiderbügeln, auf Gleitschienen verschiebbar sind, mit einem Zwischenlager für frisch eingelieferte Artikel und einem Sortiersystem zum Einsortieren der Artikel in einzelne Sammelstellen nach beliebigen Kriterien. Das Zwischenlager wird dabei durch wenigstens einen Sortierspeicher mit endloser, ringförmig geschlossener Förderstrecke gebildet.

Die Druckschrift EP 2581329 A1 zeigt eine Hängebahnanlage zum Kommissionieren von Aufträgen mit mindestens einer einem jeweiligen Auftrag zugeteilten Ware und/oder zum Retourenmanagement, mit Trolleys, sowie mit Aufgabeplätzen, einem Batchpuffer mit mehreren Strecken und Packplätzen, wobei die Aufgabeplätze, der Batchpuffer und die Packplätze mit Hängebahnschienen miteinander verbunden sind und wobei die Trolleys und die Waren Identifikationseinrichtungen aufweisen. Dabei weist die Hängebahnanlage ein Verwaltungssystem auf, zum Identifizieren und zeitweisen Verknüpfen von einem Trolley mit einer Ware, sind im Bereich des Aufgabeplatzes und des Packplatzes Identifikationserfassungseinrichtungen für einen Trolley und die Ware angeordnet und sind die Identifikationserfassungseinrichtungen mit dem Verwaltungssystem verbunden.

Die Druckschrift EP 2714552 B1 offenbart eine Verteileinrichtung, die insbesondere bei Hängeförderern zum Einsatz kommt und zum Beispiel zum Zusammenstellen einer Lieferung von Kleidungsstücken eingesetzt wird, die auf Bügeln als Hängeware in einem Hängelager bevorratet werden können. Die Verteileinrichtung lässt sich auch in den Bereichen B2B und B2C einsetzen, indem z.B. Hängetaschen oder Transporttaschen hängend befördert werden, die zur Aufnahme von Stückgütern, wie z.B. Kosmetika, Pharmaka oder Ähnlichem, geeignet sind.

Die bekannte Verteileinrichtung ist aus wenigen, technisch einfach aufgebauten Förderelementen zusammengestellt, insbesondere ausschließlich aus Geraden, Kurven und "einfachen" Weichen. Natürlich können Höhenunterschiede mittels Liften oder Ähnlichem überwunden werden. Die Verteileinrichtung baut sehr klein. Die Abstände zwischen einzelnen Strecken der Speicherkreisel sowie zwischen den Speicherkreiseln selbst können sehr klein gewählt werden. Die Investitionskosten sind geringer als bei herkömmlichen Systemen, insbesondere weil Standardkomponenten eingesetzt werden. Das System ist umlaufend angetrieben. Es benötigt keine Steig- und Gefällestrecken und ist somit in der vorzugsweise vertikalen Ausrichtung extrem platzsparend. Es weist ebenfalls 180°-Bögen auf, die aber im Gegensatz zum Stand der Technik gleichzeitig als Weiche fungieren.

Die bekannte Verteileinrichtung kommt zum Beispiel in Kommissionieranlagen häufig zum Einsatz. Die Kommissionieranlage kann einen Wareneingang, ein Lager, die Verteileinrichtung, einen optionalen Sorter sowie einen Warenausgang aufweisen. Diese Komponenten der Kommissionieranlage sind über eine Fördertechnik miteinander verbunden. Mit der Anlage können gemäss der EP2714552 B1 Kommissionieraufträge bearbeitet werden. Unter dem Begriff "Kommissionieren" wird dabei das Zusammenstellen von Stückgütern zu einem (Kommissionier-)Auftrag verstanden. Das Kommissionieren hat zum Ziel, aus einer Gesamtmenge von Gütern (Sortiment) Teilmengen aufgrund von Anforderungen (Aufträgen) zusammenzustellen. Ein Auftrag besteht aus einer oder mehreren Auftragspositionen, die auch als Auftragszeilen bzw. Order Lines bezeichnet werden. Eine Auftragszeile gibt eine jeweilige Menge eines Artikels an. Eine "Auftrags-Batch" ist eine Zusammenfassung mehrerer Aufträge zu einem Verarbeitungslos. Eine Batch ist also eine Zusammenfassung von mehreren Aufträgen zu einer geordneten Menge oder Liste von Aufträgen. Im Batch-Betrieb werden die Aufträge zunächst gesammelt und sortiert, um dann sequentiell in einem Schub, d.h. in einer "Batch", verarbeitet zu werden. Die bekannte Anlage kommt insbesondere im Bereich des Handels über das Internet (B2B, B2C etc.) zum Einsatz.

Die Druckschrift WO 2014/053380 A1 beschreibt eine portable Fördertechnik-Anlage mit einer modular aufgebauten Fördertechnik, insbesondere mit einer modularen Hänge- Fördertechnik, und mit einer Vielzahl von Transport-Modulen gelöst, die jeweils aus einer Vielzahl von vorab installierten und vorab getesteten Fördertechnikkomponenten gebildet sind, wobei die Module direkt benachbart nebeneinander und/oder übereinander angeordnet sind, um in einem miteinander verbundenen Zustand gemeinsam die Anlage zu bilden, wobei die Fördertechnik aufweist: eine Vielzahl von Förderstrecken, die hinsichtlich eines Materialflusses gemeinsam einen vorab definierten Förderstreckenverlauf bilden, wobei jede der Förderstrecken ein separates Maschinengestell aufweist; mindestens einen Antrieb; mindestens eine Steuereinrichtung; und ein Transportmittel, welches mittels des mindestens einen Antriebs entlang des Förderstreckenverlaufs bewegbar ist, um Ladungsträger, vorzugsweise hängende Bügel, Taschen oder Trolleys, durch die Anlage zu transportieren; und wobei jedes Modul aufweist: eine standardisierte Außenabmessung; eine Tragkonstruktion, deren Abmessung an die standardisierte Außenabmessung angepasst ist; und mindestens eine der Förderstrecken, wobei das Maschinengestell jeder der Förderstrecken, vorzugsweise entlang eines einheitlichen Rasters, dauerhaft mit der Tragkonstruktion verbunden ist.

Jedes der Module weist zumindest Teile einer (Hänge-)Fördertechnik auf. Mit der Fördertechnik werden Ladungsträger, wie zum Beispiel Taschen oder Bügel, hängend transportiert. Hängeförderer werden z.B. in der Bekleidungsindustrie zum innerbetrieblichen Transport von Kleidungsstücken benutzt. Die Kleidungsstücke können hängend oder liegend transportiert werden. Wenn die Kleidungsstücke hängend an Bügeln transportiert werden, spricht man von Hängeware. Wenn die Kleidungsstücke liegend transportiert werden, kommen die Taschen zum Einsatz. Man spricht dann von Liegeware, die in die Taschen gelegt wird. Ein Ladungsträger kann aber auch zum Beispiel durch einen sogenannten "Trolley" realisiert werden. Ein Trolley ist eine Art Fahrwagen, der an einer Laufschiene bewegt wird und an den Waren oder Lasten gehängt werden. Oftmals werden Plattformen an die Fahrwägen gehängt, um schwere bzw. unhandliche Stückgüter hängend zu transportieren.

Die Ladungsträger kreisen im Wesentlichen im Uhrzeigersinn durch die Anlage. Der Streckenverlauf erstreckt sich im Wesentlichen entlang äußeren Rändern der Anlage. Die Ladungsträger können aber innerhalb einzelner (Funktions-)Module auch in Abzweigungen geleitet werden und dort kreisen.

Die Druckschrift EP 2789555 B1 offenbart eine Vorrichtung zum auftragsorientierten Bereitstellen von Einzelwaren für mehrere Aufträge aus einem Warenlager umfassend mindestens einen mit einem Warenlager verbundenen Zwischenspeicher zum Zwischenspeichern von Einzelwaren mindestens eines Auftrags, jeweils einen mit dem mindestens einen Zwischenspeicher verbundenen Sammelbereich zum Sammeln der Einzelwaren des mindestens einen komplettierten Auftrags und einen mehrere Abgabelinien aufweisenden Trennbereich zum auftragsorientierten Bereitstellen der Einzelwaren des mindestens einen komplettierten Auftrags. Insbesondere ist der Zwischenspeicher als Umlaufspeicher ausgeführt. Die in dem Zwischenspeicher zwischengespeicherten Einzelwaren werden kontinuierlich umlaufend gespeichert.

Die Druckschrift WO 2017/027897 A1 beschreibt ein Kommissioniersystem zum Kommissionieren von Artikeln aus Lagerbehältern in Auftragsbehälter, mit einem Steuerrechner zum Verwalten und Abarbeiten von Kommissionieraufträgen und mit zumindest einem Kommissionierplatz gemäß dem Ware-zu-Person-Prinzip, an dem eine vom Steuerrechner vorgegebene Anzahl von Artikeln aus den Lagerbehältern in Fördertaschen kommissionierbar sind und mit einer Hängefördertechnik zum Transport der Fördertaschen und mit einem Packplatz zum Packen der Fördertaschen entnommenen, einem Kommissionierauftrag zugeordneten Artikel in den dem Kommissionierauftrag zugeordneten Auftragsbehälter, wobei an dem Kommissionierplatz eine Auftragsbehälterfördertechnik zum Transport von Auftragsbehältern, insbesondere Kisten, vorgesehen ist, und wobei der Steuerrechner zum Abarbeiten eines ersten Kommissionierauftrags dazu ausgebildet ist, die Anzahl der an dem Kommissionierplatz zu kommissionierenden Artikel derart vorzugeben, dass die zum Kommissionieren des ersten Kommissionierauftrags benötigte Anzahl an Artikeln in den dem ersten Kommissionierauftrag zugeordneten Auftragsbehälter und weitere in dem Lagerbehälter enthaltene Artikel in zumindest eine Fördertasche zum späteren Kommissionieren weiterer Kommissionieraufträge am Packplatz kommissioniert werden.

Bei allen Kommissionierungsanlagen ist es wünschenswert, mit möglichst geringem apparativen Aufwand und bei hohem Durchsatz eine effektive und schnelle Sortierung und Zusammenstellung der gewünschten Waren zu erreichen, derart, dass die zu einem Auftrag gehörenden Waren vollständig und fehlerfrei zusammengefasst und versandfertig gemacht werden können.

Wird bei der Kommissionierung ein Matrixsortierer eingesetzt, erfordert dies üblicherweise einen hohen apparativen Aufwand, wenn eine Vielzahl von Versandplätzen mit den auftragsgemäßen Warenzusammenstellungen bedient werden müssen.

DE 10 2011 103194 A1 offenbart eine Kommissionieranlage gemäß dem Oberbegriff des Anspruchs 1.

### DARSTELLUNG DER ERFINDUNG

Es ist daher eine Aufgabe der Erfindung, eine Kommissionieranlage zu schaffen, die trotz eines hohen Durchsatzes mit einem reduzierten apparativen Aufwand realisiert werden kann, so dass entweder ein eingesetzter Matrixsortierer einfacher ausgeführt oder ganz eingespart werden kann.

Eine weitere Aufgabe der Erfindung ist es, ein Verfahren zum Betrieb einer solchen Kommissionieranlage anzugeben.

Diese Aufgaben werden gelöst durch eine Kommissionieranlage gemäß Anspruch 1 sowie ein Verfahren gemäß Anspruch 10.

Die erfindungsgemässe Kommissionieranlage zum Kommissionieren von unterschiedlichen, hängend transportierbaren Waren, ist im Anspruch 1 definiert und umfasst wenigstens eine Aufgabestation mit einer Mehrzahl von parallel angeordneten Aufgabeplätzen zur Aufgabe der zu kommissionierenden Waren in die Kommissionieranlage sowie wenigstens eine Versandstation mit einer Mehrzahl von parallel angeordneten Versandplätzen zur Abgabe der kommissionierten Waren an den Versand, wobei zur Kommissionierung der Waren zwischen der Aufgabestation und der Versandstation wenigstens ein Zwischenspeicher vorgesehen ist.

Sie ist dadurch gekennzeichnet, dass der wenigstens eine Zwischenspeicher einen dynamischen Speicher zur Zwischenspeicherung der für die Kommissionierung bereitgestellten Waren und einen dem dynamischen Speicher nachgeschalteten Abrufspeicher zum Speichern von aus dem dynamischen Speicher ausgespeicherten und dabei vorsortierten Waren umfasst, welche innerhalb eines gemeinsamen Umlaufförderers angeordnet sind und über den gemeinsamen Umlaufförderer miteinander in Verbindung stehen.

Der Umlaufförderer ist ein Förderer, mit welchem die Waren in einem geschlossenen Umlauf bzw. Kreislauf gefördert werden können. An verschiedenen Stellen des Umlaufförderers können dabei betätigbare oder schaltbare Weichen vorgesehen werden, welche ein gezieltes Einfahren von neuen Waren in den Umlauf bzw. ein Ausfahren von im Umlauf zirkulierenden Waren ermöglichen. Die Waren sind dabei in Transporteinheiten unterteilt, die jeweils für sich bewegt und dem Umlauf zugefügt bzw. dem Umlauf entnommen werden können. Die im Umlauf zirkulierenden und im dynamischen Speicher abgelegten Waren liegen in einer bestimmten Reihenfolge vor, die sich meist nach dem zeitlich gestaffelten Ausspeichern der Waren aus dem Warenlager richtet, nicht jedoch den durch die Aufträge bestimmten Warenzusammenstellungen ("Batches") entspricht.

Durch eine Vorsortierung der Waren im Abrufspeicher werden die Waren bereits in einer den Aufträgen entsprechenden Zusammenstellung zusammengefasst, so dass ein nachfolgender Matrixsortierer von Sortierungsarbeit entlastet und entsprechend kleiner dimensioniert oder ganz eingespart werden kann.

Eine Ausgestaltung der Kommissionieranlage nach der Erfindung ist dadurch gekennzeichnet, dass zwischen dem Zwischenspeicher und der Versandstation zum weiteren Sortieren ein Matrixsortierer angeordnet ist. Der Einsatz eines solchen Matrixsortierers ist insbesondere dann wünschenswert, wenn die Waren eines Auftrags in einer bestimmten Reihenfolge an der Versandstation vorliegen sollen.

Eine andere Ausgestaltung der Kommissionieranlage nach der Erfindung ist dadurch gekennzeichnet, dass der Umlaufförderer in zwei Bereiche unterteilt ist, dass der dynamische Speicher in einem der beiden Bereiche und der Abrufspeicher in dem anderen der beiden Bereiche angeordnet sind, und dass für den Transport der Waren vom dynamischen Speicher zum Abrufspeicher der Umlaufförderer vorgesehen ist.

Hierdurch ergibt sich ein kompakter und effektiver Zwischenspeicher mit Sortierfunktion, der einen hohen Warendurchsatz ermöglicht.

Die Kommissionieranlage nach der Erfindung ist dadurch gekennzeichnet, dass der Umlaufförderer eine Mehrzahl von Förderstrecken aufweist, und dass der dynamische Speicher und der Abrufspeicher jeweils durch eine Mehrzahl von als Stiche von vorgegebenen Förderstrecken des Umlaufförderers abgehenden Speicherstrecken gebildet werden.

Diese Konfiguration trägt zur Kompaktheit der Anlage bei und ermöglicht kurze Verbindungen zwischen den Speicherstrecken und Speicherabschnitten des Zwischenspeichers.

Erfindungsgemäß weisen die Speicherstrecken jeweils einen Eingang und einen Ausgang auf, und die Speicherstrecken sind jeweils mit dem Eingang an eine erste Förderstrecke und mit dem Ausgang an eine zweite Förderstrecke angeschlossen.

Erfindungsgemäß sind die Förderrichtungen der ersten und zweiten Förderstrecke dabei entgegengesetzt.

Erfindungsgemäß sind die Speicherstrecken eingangsseitig über eine betätigbare Ausfahrweiche und ausgangsseitig über eine betätigbare Einfahrweiche an die zugehörigen Förderstrecken des Umlaufförderers angeschlossen.

Weiterhin lässt sich der apparative Aufwand erfindungsgemäß dadurch verringern, dass die Speicherstrecken jeweils als Gravitationsstrecken ausgebildet sind, die vom Eingang zum Ausgang ein Gefälle aufweisen, und auf denen sich die geförderten Waren aufgrund der Schwerkraft selbsttätig vom Eingang zum Ausgang bewegen. Am Ausgang der Speicherstrecken ist dann jeweils ein Stoppmechanismus vorgesehen, der die Abwärtsbewegung der Waren stoppt. Soll dann eine Ware aus der Speicherstrecke ausgespeichert werden, wird sie vereinzelt und über die entsprechende Einfahrweiche in den Umlaufförderer eingegeben.

Zur Ausbildung der Gravitationsstrecken können die ersten Förderstrecken auf einer ersten Höhe verlaufen und die zweiten Förderstrecken auf einer zweiten Höhe verlaufen, wobei die erste Höhe grösser ist als die zweite Höhe. Die Höhendifferenz muss dabei so gewählt werden, dass das entstehende Gefälle auch bei geringem Warengewicht eine sichere und ausreichend schnelle Bewegung der Waren auf der Gravitationsstrecke ermöglicht.

Weiterhin können die Speicherstrecken des dynamischen Speichers und des Abrufspeichers parallel zueinander verlaufen, wobei die Speicherstrecken des dynamischen Speichers jeweils das gleiche erste Gefälle aufweisen, die Speicherstrecken des Abrufspeichers jeweils das gleiche zweite Gefälle aufweisen, und das erste Gefälle und das zweite Gefälle einander entgegengesetzt orientiert sind. Auch diese Massnahmen erhöhen den Durchsatz und die Kompaktheit der Anlage.

Insbesondere kann dabei der Umlaufförderer beim Übergang vom ersten Bereich in den zweiten Bereich von der zweiten Höhe auf die erste Höhe und beim Übergang vom zweiten Bereich in den ersten Bereich von der zweiten Höhe auf die erste Höhe wechseln.

Die zu kommissionierenden Waren können zur Zwischenspeicherung und Vorsortierung zwischen den beiden Bereichen des Umlaufförderers über eine Zuführlinie in den Umlaufförderer eingebbar und dort auch wieder über eine Abführlinie aus dem Abrufspeicher vorsortiert entnehmbar sind.

Auch kann am Ausgang des dynamischen Speichers zum Abrufspeicher hin wenigstens eine Rückführungsstrecke mit einer zugehörigen Ausfuhrweiche vorgesehen sein, über welche Waren auf dem Weg vom dynamischen Speicher zum Abrufspeicher wahlweise von der zweiten Förderstrecke zur ersten Förderstrecke zurückbefördert werden können.

Eine andere Ausgestaltung der Kommissionieranlage nach der Erfindung ist dadurch gekennzeichnet, dass der Umlaufförderer einen Hängeförderer umfasst. An dem Hängeförderer werden die Waren hängend transportiert, was eine Erhöhung der Warendichte auf den Transportwegen und auf den Speicherstrecken ermöglicht.

Insbesondere können die zu kommissionierenden Waren im Umlaufförderer an einzelnen Laufwagen hängend entlang einer Laufschiene transportiert werden, wobei die Laufwagen im Umlaufförderer durch eine parallel zur Laufschiene in einer eigenen Schiene geführte, angetriebene Förderkette bewegt werden, die mit den Laufwagen in lösbarem Eingriff steht. Geeignete Laufwagen und Laufschienen sind beispielsweise in der Druckschrift WO 2016/030275 A1 detailliert beschrieben und offenbart. Es ist aber auch denkbar, eine Förderkette seitlich anzuordnen, wie dies in der Druckschrift WO 2016/030273 A1 gezeigt ist.

Insbesondere, wenn es sich bei den zu kommissionierenden Waren überwiegend um Modeartikel handelt, können zum Transport der zu kommissionierenden Waren an den Laufwagen Transporttaschen fest und/oder Kleiderbügel lösbar hängend anbringbar sein.

Eine weitere Erhöhung des Durchsatzes ergibt sich, wenn in der Kommissionieranlage mehrere parallel arbeitende Zwischenspeicher vorgesehen sind.

Wenn für den Transport der Waren Laufwagen an Laufschienen eingesetzt werden, kann eine Rückführung der nicht mit Waren beaufschlagten Laufwagen von der Versandstation zur Aufgabestation vorgesehen werden, um einen geschlossenen Kreislauf der Transportmittel zu erreichen.

Insbesondere kann dabei in der Rückführung wenigstens ein Leerspeicher für die nicht mit Waren beaufschlagten Laufwagen vorgesehen sein.

Für den Betrieb der Kommissionieranlage kann eine Steuerung vorgesehen sein, welche nach Maßgabe eingehender Aufträge die entsprechenden Waren pro Auftrag zusammenstellt und in zusammengestellter Form zu den Versandplätzen in der Versandstation leitet.

Das erfindungsgemässe Verfahren zum Betrieb einer Kommissionieranlage nach der Erfindung ist im Anspruch 10 definiert und dadurch gekennzeichnet, dass die zu einer Mehrzahl von Aufträgen gehörenden Waren zunächst in den dynamischen Speicher des wenigstens einen Zwischenspeichers eingespeichert, dann in den Abrufspeicher vorsortiert und anschließend an die einzelnen Versandplätze in der Versandstation übergeben werden, sodass alle zu einem Auftrag gehörenden Waren am jeweiligen Versandplatz vorliegen.

Gemäss einer Ausgestaltung des Verfahrens nach der Erfindung werden die Waren auf dem Weg vom dynamischen Speicher zum Abrufspeicher vorsortiert.

Dabei können zum Vorsortieren die aus dem dynamischen Speicher kommenden Waren wahlweise in den dynamischen Speicher zurückgeführt oder zum Abrufspeicher weiterbefördert werden.

Insbesondere kann die wahlweise Zurückführung der Waren in den dynamischen Speicher über wenigstens eine Rückführungsstrecke erfolgen, die über eine steuerbare Ausfahrweiche an den Umlaufförderer angeschlossen ist.

### KURZE ERLÄUTERUNG DER FIGUREN

- Figur 1: zeigt in schematischer Darstellung eine Kommissionieranlage, die zur Verwirklichung der vorliegenden Erfindung geeignet ist;
- Figur 2: zeigt eine zu Figur 1 vergleichbare Kommissionieranlage, die für unterschiedlich zu transportierende Waren ausgelegt ist und mit mehreren parallel arbeitenden Zwischenspeichern ausgestattet ist;
- Figur 3: zeigt ein erstes Ausführungsbeispiel für einen Zwischenspeicher nach der Erfindung mit einer Rückführungsstrecke zwischen dynamischem Speicher und Vorspeicher;
- Figur 4: zeigt ein zweites Ausführungsbeispiel für einen Zwischenspeicher nach der Erfindung mit zwei parallelen Rückführungsstrecken zwischen dynamischem Speicher und Vorspeicher;
- Figur 5: zeigt ein zu Figur 3 vergleichbares Ausführungsbeispiel für einen Zwischenspeicher nach der Erfindung mit einer zusätzlichen Rückführungslinie vor der Rückführungsstrecke zwischen dynamischem Speicher und Vorspeicher;
- Figur 6: zeigt ein zu Figur 5 vergleichbares Ausführungsbeispiel für einen Zwischenspeicher nach der Erfindung, wobei der dynamische Speicher unterteilt ist und eine zusätzliche Zuführlinie und Rückführungsstrecke zwischen den Teilen des dynamischen Speichers aufweist;
- Figur 7: zeigt ein Ausführungsbeispiel einer kompletten Kommissionieranlage nach der Erfindung, die für den Warentransport in hängenden Taschen und mittels Kleiderbügeln geeignet ist und einen Leerspeicher in der Rückführung der leeren Transportmittel aufweist;
- Figur 8: zeigt ein zu Figur 7 vergleichbares Ausführungsbeispiel einer kompletten Kommissionieranlage nach der Erfindung, bei der zwei Leerspeicher für die leeren Transportmittel vorgesehen sind;
- Figur 9: zeigt in verschiedenen Teilfiguren unterschiedliche Ansichten eines Zwischenspeichers gemäss einem Ausführungsbeispiel der Erfindung, der mit Gravitationsstrecken als Speicherstrecken arbeitet;
- Figur 10: ist eine vergrösserte Darstellung der Figur 9(a);
- Figur 11: zeigt einen Ausschnitt eines Ausführungsbeispiels eines Umlaufförderers, wie er im Zwischenspeicher der Erfindung eingesetzt werden kann; und
- Figur 12: zeigt einen beispielhaften Förderwagen eines Umlaufförderers gemäss Figur 11 mit angehängter Transporttasche.

### WEGE ZUR AUSFÜHRUNG DER ERFINDUNG

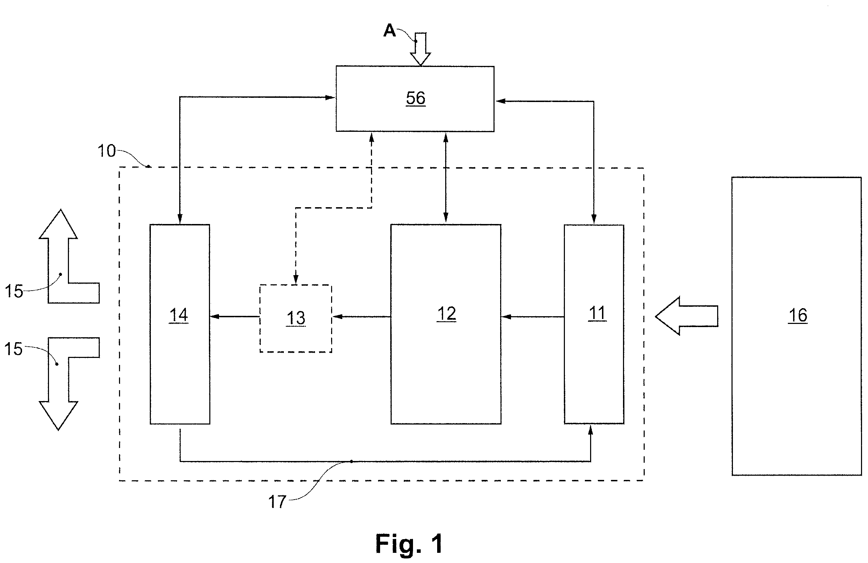

In Figur 1 ist in schematischer Darstellung eine Kommissionieranlage 10 wiedergegeben, die zur Verwirklichung der vorliegenden Erfindung geeignet ist. Die Kommissionieranlage 10 bezieht die zu kommissionierenden Waren üblicherweise aus einem Warenlager 16, welches beispielsweise als Hochregallager ausgebildet sein kann. Andere Arten von Lagern sind aber auch denkbar.

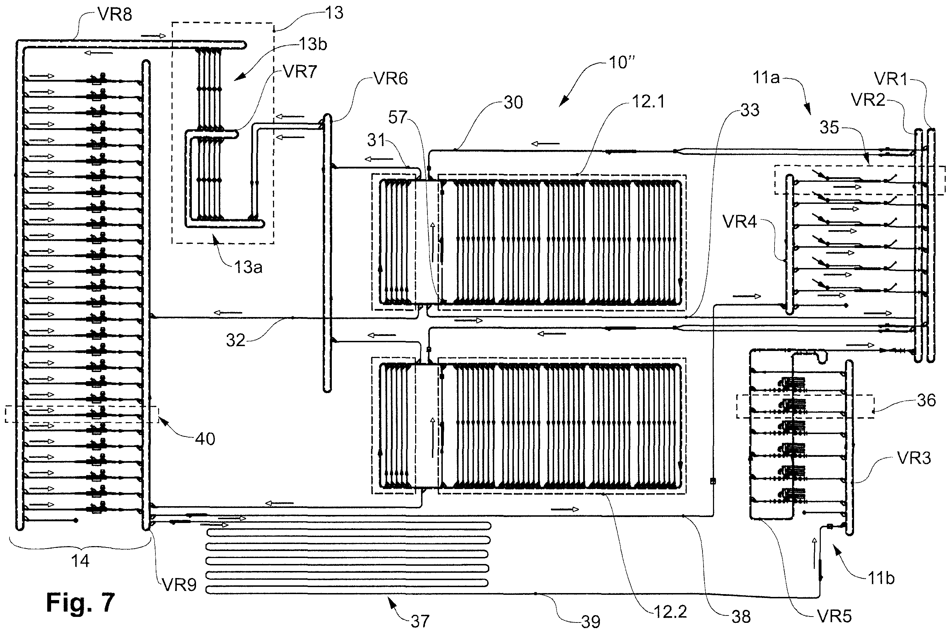

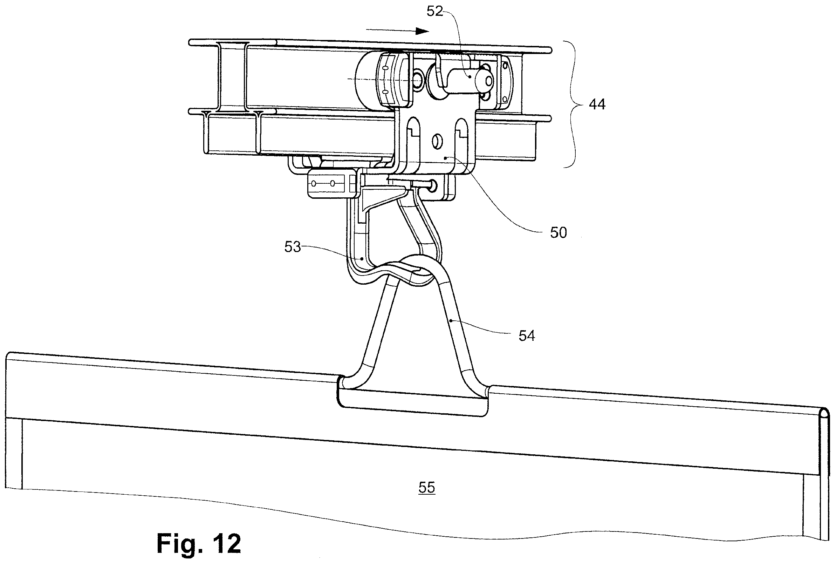

Aus dem Warenlager 16 werden, wenn entsprechende Aufträge A erteilt werden, die in den Aufträgen angeforderten Waren ausgelagert und über eine Aufgabestation 11 in die Kommissionieranlage 10 eingegeben. In der Aufgabestation 11 sind üblicherweise mehrere parallel arbeitende Aufgabeplätze (35,36 in Figur 7) angeordnet, an denen die aus dem Warenlager 16 kommenden Waren (mittels RFID, Strichcode oder dergleichen) datenmäßig erfasst und den innerhalb der Kommissionieranlage zirkulierenden Transportmitteln (z.B. Transporttasche 55 in Figur 12) zugeordnet und zugeführt werden. Die aufgenommenen Daten werden an eine zentrale Steuerung 56 übermittelt, in welche die Informationen über die Aufträge A eingespeist werden und welche den Betrieb der Kommissionieranlage 10 steuert und die Kommissionierung vornimmt.

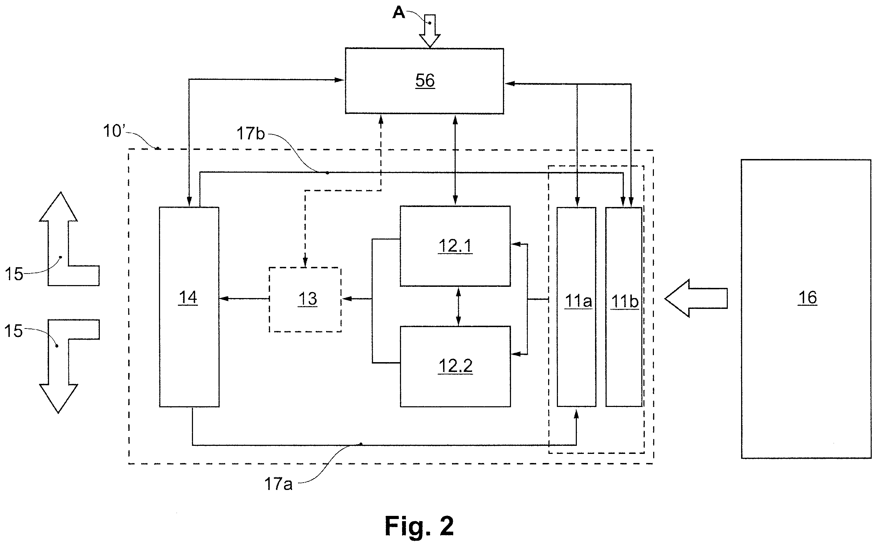

Die aus dem Warenlager 16 ausgelagerten Waren werden von der Aufgabestation 11 in einen Zwischenspeicher 12 weiter befördert, wo sie zur weiteren Bearbeitung der Aufträge zwischengelagert werden. Zur Abarbeitung der Aufträge A müssen nun die zu jedem Auftrag gehörenden Waren zu einer Gruppe ("Batch") zusammengestellt werden, damit sie dann in der Versandstation 14 verpackt und zur Auslieferung bereit gemacht werden können. Die Versandstation 14 umfasst üblicherweise eine Mehrzahl von einzelnen, parallel arbeitenden Versandplätzen (40 in Figur 7). Die Zusammenstellung der Waren erfolgt so, dass an einem Versandplatz jeweils ein Auftrag A komplett erledigt werden kann. Hierzu kann - insbesondere, wenn die Waren eines Auftrags in einer bestimmten Reihenfolge vorliegen sollen - ein Matrixsortierer 13 eingesetzt werden (in Fig. 1 und 2 als Option gestrichelt eingezeichnet), dem die Waren aus dem Zwischenspeicher 12 zugeführt werden, und der die Waren in Gruppen an die Versandplätze in der Versandstation 14 weiterleitet. Die im Zwischenspeicher 12, ggf. im Matrixsortierer 13 und in der Versandstation 14 ablaufenden Vorgänge, die insbesondere die Betätigung einer Vielzahl von Weichen erfordern, werden nach Maßgabe der Aufträge A von der Steuerung 56 gesteuert. Von der Versandstation 14 gehen dann die kommissionierten und verpackten Waren in den Versand 15, um an die jeweiligen Auftraggeber ausgeliefert zu werden.

Handelt es sich bei den im Warenlager 16 eingelagerten und zu kommissionierenden Waren um verschiedenartige Waren wie zum Beispiel Kleingeräte, Haushaltsgeräte, Kleidungsstücke, Hemden, Wäsche, Kosmetika usw., ist es zweckmäßig, die Waren innerhalb der Kommissionieranlage auf unterschiedliche, an die Waren angepasste Weise zu transportieren. So können beispielsweise für Jacken, Mäntel, Hemden oder Kleider für den Transport Kleiderbügel vorgesehen werden, an denen die Ware hängend durch die Kommissionieranlage transportiert wird, während andere Waren in dafür geeigneten Transporttaschen durch die Kommissionieranlage bewegt werden.

In einem solchen Fall ändert sich der grundsätzliche Aufbau der Kommissionieranlage wie in Figur 2 dargestellt. Die Kommissionieranlage 10' der Figur 2 unterscheidet sich von der Kommissionieranlage 10 der Figur 1 unter anderem dadurch, dass 2 unterschiedliche Aufgabestationen 11a und 11b vorhanden sind, von denen die eine für die Aufgabe von an Kleiderbügeln hängenden Waren und die andere für die Beladung von Transporttaschen vorgesehen sind. Die in den beiden Aufgabestationen 11a und 11b verarbeiteten Waren werden am Ausgang der Aufgabestationen wieder zusammengeführt und dann gemeinsam in zunächst beliebiger Reihenfolge weiterverarbeitet. Diese Weiterverarbeitung kann in einem einzelnen Zwischenspeicher erfolgen, kann aber auch, wie Figur 2 zeigt, in 2 parallel arbeitenden Zwischenspeichern 12.1 und 12.2 durchgeführt werden, die dann am Ausgang ggf. wieder auf einen gemeinsamen Matrixsortierer 13 arbeiten. Zur Erhöhung des Warendurchsatzes können aber in der Kommissionieranlage auch ohne weiteres mehrere parallel arbeitende komplette Kommissionierungslinien vorgesehen werden.

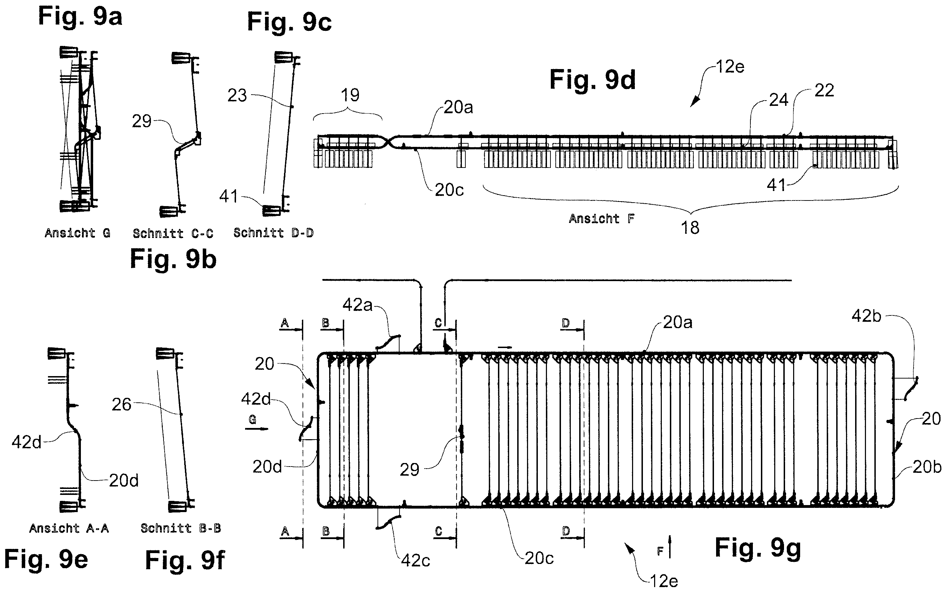

Werden die Waren beispielsweise an einzelnen Laufwagen hängend an Schienen durch die Kommissionierungsanlage transportiert (Transporteinheit 41 in Figur 9), müssen die (leeren) Laufwagen nach der Abnahme der Ware in der Versandstation 14 wieder zurück zur Aufgabestation 11 bzw. zu den Aufgabestationen 11a und 11b zur neuerlichen Beladung zurückgeführt werden. Hierfür ist in der Kommissionieranlage 10 der Figur 1 eine Rückführung 17 vorgesehen. In der Kommissionieranlage 10' der Figur 2 werden entsprechend der unterschiedlichen Transportart 2 Rückführungen 17a und 17b verwendet, die den verschiedenen Aufgabestationen 11a und 11b zugeordnet sind.

Damit der an sich apparatemäßig aufwändige Matrixsortierer 13 auch bei einer Vielzahl von Versandplätzen kleiner als üblich ausgeführt oder ganz eingespart werden kann, soll gemäß der Erfindung im Zwischenspeicher 12 bereits eine spezielle Vorsortierung der Waren vorgenommen werden. Hierzu dient - wie nachfolgend erläutert wird - ein spezieller Aufbau des Zwischenspeichers 12 bzw. 12.1 und 12.2.

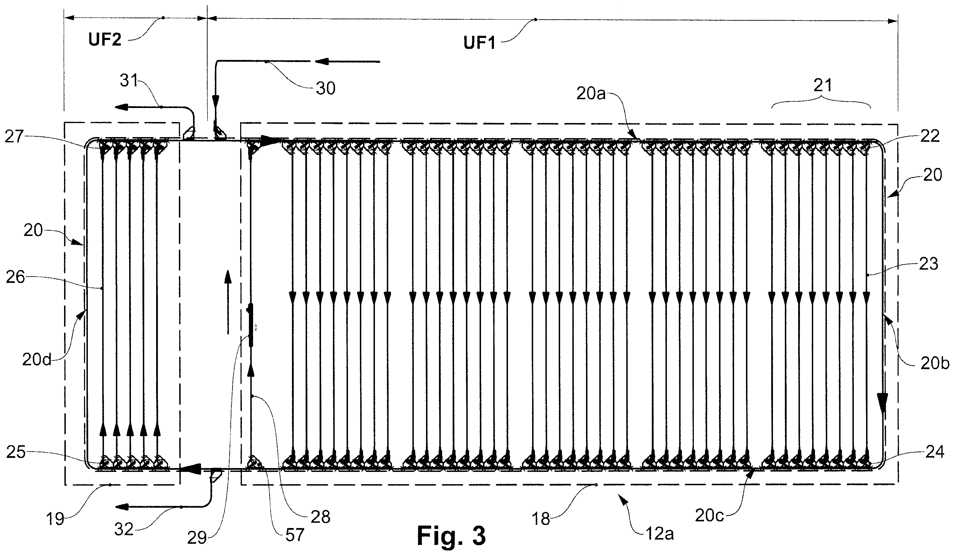

Ein Ausführungsbeispiel eines solchen speziellen Aufbaus ist in Figur 3 wiedergegeben. Der Zwischenspeicher 12a der Figur 3 umfasst einen Umlaufförderer 20, der im dargestellten Beispiel eine (im Wesentlichen horizontal) liegende rechteckige Grundform aufweist mit zwei gegenüberliegenden langen Seiten (Förderstecken 20a und 20c) und zwei gegenüberliegenden kurzen Seiten (Förderstrecken 20b und 20d). Wie durch die eingezeichneten Pfeile kenntlich gemacht ist, bewegen sich die vom Umlaufförderer 20 geförderten Waren im Uhrzeigersinn auf den Förderstrecken 20a-d um das Rechteck.

Die rechteckige Grundform des Umlaufförderers 20 ist nun unterteilt in einen ersten Bereich UF1 (rechts) und einen zweiten Bereich UF2 (links). Im ersten Bereich UF1 ist (in Figur 3 durch ein gestricheltes Rechteck eingerahmt) ein dynamischer Speicher ("Dynamic Buffer") 18 angeordnet, der eine Vielzahl von Speicherstrecken 23 enthält, die in insgesamt fünf Speicherabschnitten 21 zu je acht parallelen Speicherstrecken zusammengefasst sind. Die Speicherstrecken 23 verlaufen als rechtwinklig abgehende Stiche zwischen der Förderstrecke 20a und der Förderstrecke 20c des Umlaufförderers 20. Jede Speicherstrecke 23 hat einen (in Figur 3 oben liegenden) Eingang und einen (in Figur 3 unten liegenden) Ausgang, so dass die Waren darauf in der angegeben Pfeilrichtung (von oben nach unten) transportiert werden.

Am Eingang jeder Speicherstrecke 23 ist eine betätigbare Ausfahrweiche 22 angeordnet, die beim Betätigen dafür sorgt, dass auf der Förderstrecke 20a beförderte Waren von der Förderstrecke 20a in die Speicherstrecke 23 umgelenkt werden. Am Ausgang jeder Speicherstrecke 23 ist eine betätigbare Einfahrweiche 24 angeordnet, die beim Betätigen dafür sorgt, dass eine Ware aus der Speicherstrecke 23 in die Förderstrecke 20c des Umlaufförderers 20 umgelenkt wird. Hierzu ist es weiterhin notwendig, die Ware auf der Speicherstrecke 23 vor Einfahrweiche 24 zu vereinzeln und aus der Speicherstrecke 23 über die Einfahrweiche 24 heraus zu befördern.

Im zweiten Bereich UF2 ist (in Figur 3 ebenfalls durch ein gestricheltes Rechteck eingerahmt) ein Abrufspeicher("PreBuffer") 19 angeordnet, der in einer Gruppe insgesamt fünf parallele Speicherstrecken 26 enthält. Die Speicherstrecken 26 verlaufen als rechtwinklig abgehende Stiche zwischen der Förderstrecke 20c und der Förderstrecke 20a des Umlaufförderers 20. Jede Speicherstrecke 26 hat einen (in Figur 3 unten liegenden) Eingang und einen (in Figur 3 oben liegenden) Ausgang, so dass die Waren darauf in der angegeben Pfeilrichtung (von unten nach oben) transportiert werden. Die Transportrichtung auf den Speicherstrecken 26 ist somit der Transportrichtung auf den Speicherstrecken 23 entgegengesetzt.

Am Eingang jeder Speicherstrecke 26 ist eine betätigbare Ausfahrweiche 25 angeordnet, die beim Betätigen dafür sorgt, dass auf der Förderstrecke 20c beförderte Waren von der Förderstrecke 20c in die Speicherstrecke 26 umgelenkt werden. Am Ausgang jeder Speicherstrecke 26 ist eine betätigbare Einfahrweiche 27 angeordnet, die beim Betätigen dafür sorgt, dass eine Ware aus der Speicherstrecke 26 in die Förderstrecke 20a des Umlaufförderers 20 umgelenkt wird. Hierzu ist es ebenfalls notwendig, die Ware auf der Speicherstrecke 26 vor Einfahrweiche 27 zu vereinzeln und aus der Speicherstrecke 26 über die Einfahrweiche 27 heraus zu befördern.

Der dynamische Speicher 18 und der Abrufspeicher19 sind somit über den Umlaufförderer 20 beförderungstechnisch eng miteinander verbunden. Zwischen dem dynamischen Speicher 18 und dem Abrufspeicher19 ist ein Zwischenraum freigelassen, in welchem mehrere Beförderungslinien 30, 31, 32 vom Umlaufförderer 20 weg- bzw. zum Umlaufförderer 20 hin führen. Über eine Zuführlinie 30 und eine entsprechende Einfahrweiche werden aus der Aufgabestation 11 kommende Waren in den Umlaufförderer 20 eingegeben und dann im dynamischen Speicher 18 und seinen Speicherstrecken 23 zwischengespeichert. Über eine Abführlinie 31 werden andererseits die im Abrufspeicher19 vorsortiert eingespeicherten Waren über eine Ausfahrweiche vom Umlaufförderer 20 abgenommen und an den Matrixsortierer 13 (oder direkt an die Versandstation 14) weitergeleitet. Eine weitere Abführlinie 32 mit entsprechender Ausfahrweiche kann bei der Verwendung von Tragetaschen dafür eingesetzt werden, leere Tragetaschen zur Versandstation 14 zu transportieren.

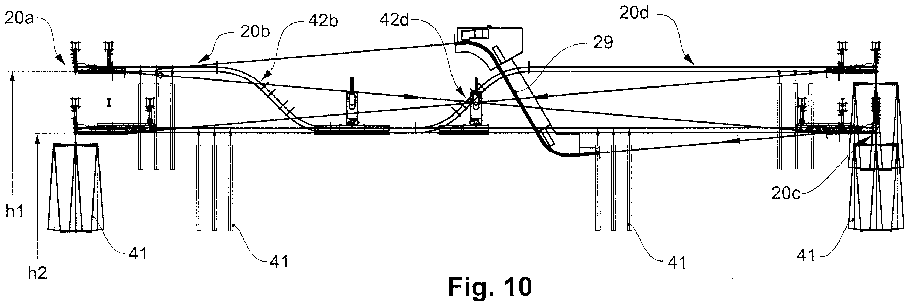

Die Speicherstrecken 23 und 26 sind im dargestellten Ausführungsbeispiel als passive Gravitationsstrecken ausgebildet, die vom Eingang zum Ausgang ein Gefälle aufweisen, und auf denen sich die geförderten Waren (z.B. an den vorher erwähnten Laufwagen hängend) aufgrund der Schwerkraft selbsttätig (d.h. ohne den Eingriff mit einer Förderkette oder dgl.) vom Eingang zum Ausgang bewegen. Hierzu ist es notwendig, dass die Förderstrecke 20a im ersten Bereich UF1 des Umlaufförderers 20 höher liegt, als die Förderstrecke 20c. Umgekehrt muss die Förderstrecke 20c im zweiten Bereich UF2 des Umlaufförderers 20 höher liegen, als die Förderstrecke 20a, um ein gegenläufiges Gefälle zu erzeugen. Um den geschlossenen Umlauf zu gewährleisten, muss die Förderstrecke 20a beim Übergang vom zweiten Bereich UF2 zum ersten Bereich UF1 eine Steigungsstrecke (42a,c in Figur 9) umfassen, ebenso, wie die Förderstrecke 20c beim Übergang vom ersten Bereich UF1 zum zweiten Bereich UF2. Entsprechend muss jeweils eine Gefällestrecke (42b,d in Figur 9) in den Förderstrecken 20b und 20c vorgesehen werden. Auf diese Besonderheiten wird im Zusammenhang mit den Figuren 9 und 10 weiter und noch einmal eingegangen.

Um innerhalb des ersten Bereichs UF1 bzw. des dynamischen Speichers 18 einen geschlossenen Umlauf möglich zu machen, ist auf der an den Abrufspeicher19 grenzenden Seite des dynamischen Speichers 18 eine Rückführungsstrecke 28 mit einer entsprechenden Ausfahrweiche 57 am Eingang und einer Einfahrweiche am Ausgang angeordnet, in der zur Überwindung des Höhenunterschiedes ein Steigförderer 29 eingesetzt ist. Mit Hilfe der Rückführungsstrecke 28 und einer entsprechenden Ansteuerung der zugehörigen Ausfahrweiche 57 ist es möglich, den Abrufspeicher 19 mit auftragsgemäss vorsortierten Waren zu füllen. Dazu werden aus dem dynamischen Speicher 18 Waren in (unsortierter) Reihenfolge auf die Förderstrecke 20c ausgespeichert und durch den Umlaufförderer 20 in Richtung auf den Abrufspeicher 19 weiterbefördert. Durch geeignetes Ansteuern der Ausfahrweiche 57 der Rückführungsstrecke 28 werden an der Ausfahrweiche 57 diejenigen der ausgespeicherten Waren zum Abrufspeicher 19 durchgelassen, die auftragsgemäss in der Versandstation 14 benötigt werden. Die anderen, nicht benötigten Waren werden über die Rückführungsstrecke 28 wieder zurück in den dynamischen Speicher 18 geleitet und befördert. Im Abrufspeicher 19 können dann die durchgelassenen Waren in den Speicherstrecken 26 geeignet gruppiert und schliesslich über die Abführlinie 31 zur Versandstation 14 befördert werden.

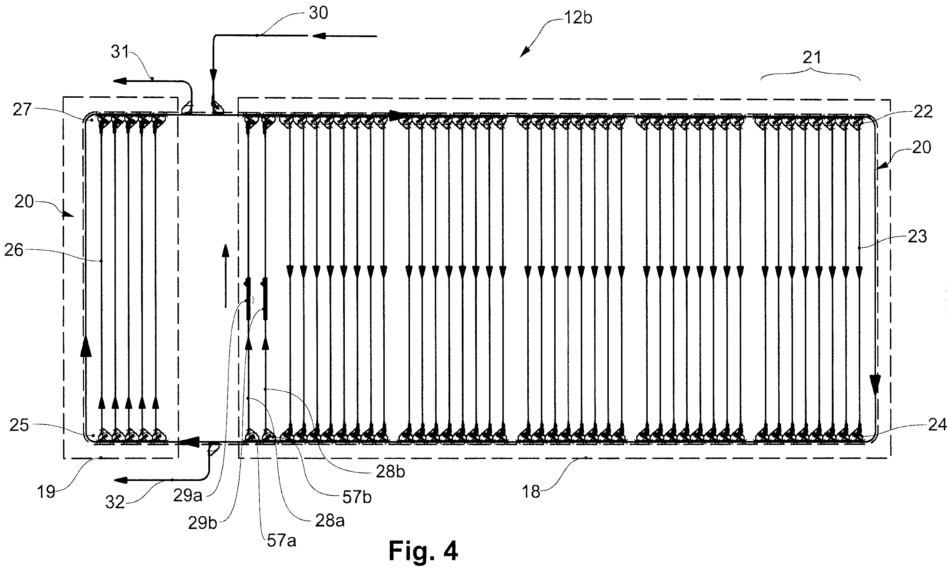

Figur 4 zeigt ein gegenüber Figur 3 leicht abgewandeltes Ausführungsbeispiel eines Zwischenspeichers nach der Erfindung. Der Unterschied beim Zwischenspeicher 12b besteht darin, dass anstelle der einen Rückführungsstrecke 28 nunmehr zwei parallele Rückführungsstrecken 28a und 28b mit entsprechenden Steigförderern 29a und 29b und Ausfahrweichen 57a und 57b vorgesehen sind, die eine Umordnung bzw. eine Umsortierung der Waren auf dem Weg vom dynamischen Speicher 18 zum Abrufspeicher 19 weiter erleichtern bzw. beschleunigen.

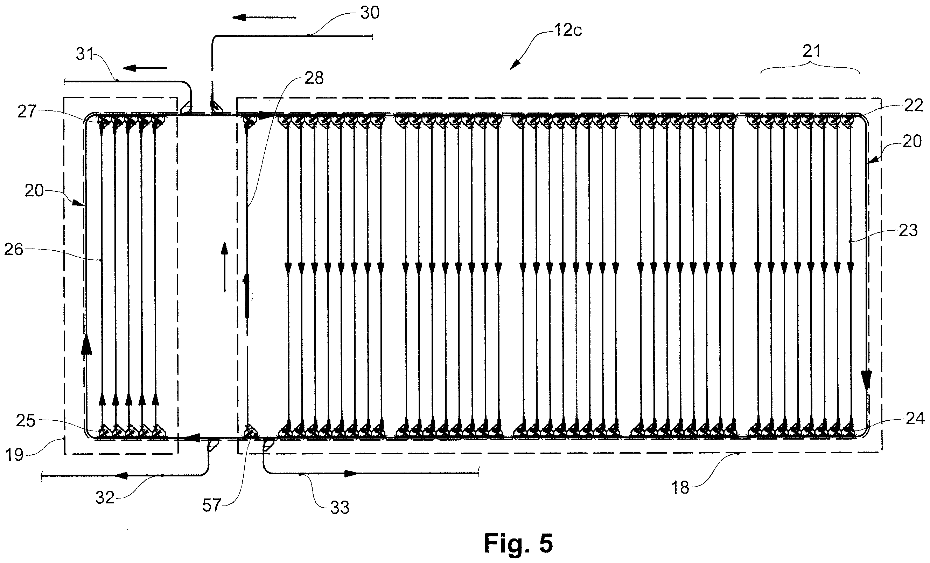

Figur 5 zeigt ein gegenüber Figur 3 leicht abgewandeltes Ausführungsbeispiel eines Zwischenspeichers nach der Erfindung. Der Unterschied beim Zwischenspeicher 12c besteht darin, dass vor der Rückführungsstrecke 28 von dem Umlaufförderer 20 eine Rückführungslinie 33 abgeht, über die bei Bedarf Waren vom Umlaufförderer 20 zur Aufgabestation 11 zurückbefördert werden können.

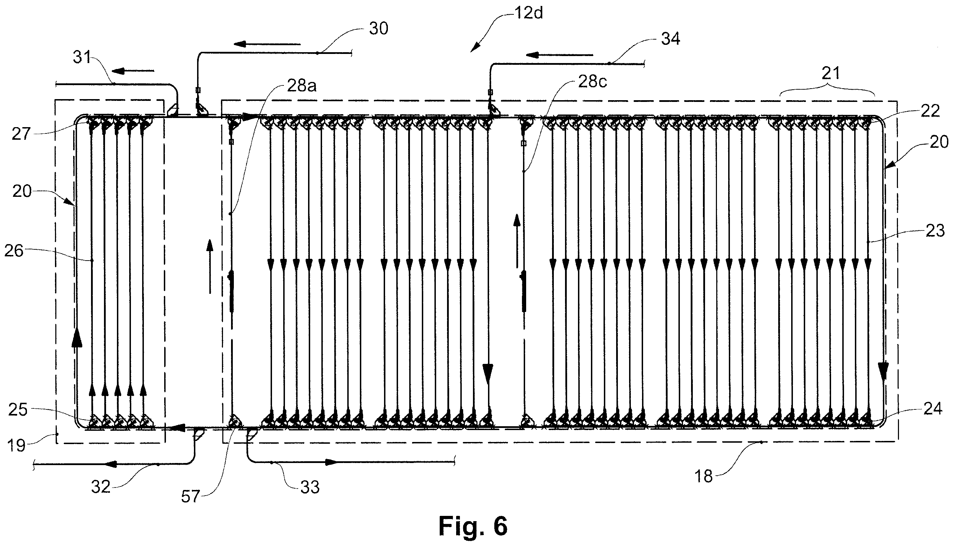

Figur 6 zeigt ein gegenüber Figur 3 leicht abgewandeltes Ausführungsbeispiel eines Zwischenspeichers nach der Erfindung. Der Unterschied beim Zwischenspeicher 12d besteht darin, dass im Mittelteil des dynamischen Speichers 18 eine zusätzliche Rückführungsstrecke 28c eingebaut ist, und an dieser Stelle eine weitere Zuführlinie 34 vorgesehen ist. Damit wird der dynamische Speicher 18 unterteilt in 2 Teilspeicher, die separat befüllbar sind und aus denen heraus separat Waren umgeordnet werden können.

In Figur 7 ist ein Ausführungsbeispiel einer Kommissionieranlage dargestellt, die weitere Einzelheiten zeigt. Die Kommissionieranlage 10", die beispielsweise für Durchsätze in der Grössenordnung von mehreren Tausend Transporteinheiten bzw. Waren pro Stunde ausgelegt sein kann, umfasst eine erste Aufgabestation 11a mit insgesamt 6 parallel arbeitenden Aufgabeplätzen 35, an denen jeweils Kleidung zum Transportieren innerhalb der Kommissionieranlage auf Kleiderbügeln hängend aufgegeben werden kann ("Garment On Hanger" GOH). Eine zweite Aufgabestation 11b mit ebenfalls 6 Aufgabeplätzen 36 dient dazu, Waren, die nicht auf einen Kleiderbügel gehängt werden können, in Transporttaschen ("Bags") einzufüllen.

Für die Zwischenspeicherung sind 2 parallel arbeitende Zwischenspeicher 12.1 und 12.2 vorgesehen, die jeder für sich einen inneren Aufbau aufweisen, wie er in Figuren 3 bis 6 beispielhaft gezeigt ist. Hinter den Zwischenspeichern 12.1 und 12.2 ist in diesem Fall ein Matrixsortierer 13 angeordnet mit zwei hintereinander liegenden Sortiererstufen 13a und 13b. Vom Ausgang des Matrixsortierers 13 gelangen die Waren in die Versandstation 14 mit insgesamt 28 einzelnen, parallel arbeitenden Versandplätzen 40. Der Transport der Waren zwischen den einzelnen Anlageteilen erfolgt über Verteilringe VR1 bis VR9, wobei der Verteilring VR8 die gemäß Auftrag sortierten Waren zu den einzelnen Versandplätzen 40 bringt, und der Verteilring VR9 die leeren Transportmittel sammelt für eine Rückführung über die Leer-Rückführungslinien 38 und 39 zu den entsprechenden Aufgabestationen 11a und 11b. In die Leer-Rückführungslinie 39 für die leeren Transporttaschen ist ein Leerspeicher 37 eingefügt, in welchem die leeren Transporttaschen gesammelt und zwischengelagert werden können. Der Verteilring VR6 sammelt die vorsortierten Waren aus beiden Zwischenspeichern 12.1 und 12.2 und gibt sie an den Matrixsortierer 13 weiter. Man erkennt, dass der Matrixsortierer 13 mit jeweils 5 Strecken in den beiden Sortiererstufe 13a und 13b wegen der Vorsortierung in den Zwischenspeichern 12.1 und 12.2 sehr klein ausgeführt werden kann.

Der Verteilring VR7 verbindet die beiden Sortiererstufen 13a und 13b untereinander. Der Verteilring VR4 verteilt die zurückgeführten leeren Transportmittel (ohne die auf Kleiderbügeln hängende Ware) an die einzelnen Aufgabeplätze 35 der Aufgabestation 11a, während der Verteilring VR3 eine entsprechende Verteilung der leeren Transporttaschen an die Aufgabeplätze 36 der Aufgabestation 11b vornimmt. Die mit Waren gefüllten Transportmittel werden mittels der Verteilringe VR1, VR2 und VR5 gesammelt für die Eingabe in die Zwischenspeicher 12.1 und 12.2.

in einer solchen Kommissionieranlage 10" werden die zu einer Mehrzahl von Aufträgen gehörenden Waren zunächst weitgehend ungeordnet in den dynamischen Speicher der Zwischenspeicher 12.1 und 12.2 eingespeichert, dann mittels des Abrufspeichers vorsortiert und anschließend über den Matrixsortierer 13 derart an die einzelnen Versandplätze 40 in der Versandstation 14 übergeben, dass alle zu einem Auftrag gehörenden Waren am jeweiligen Versandplatz 40 in einer vorbestimmten Reihenfolge vorliegen. Ist insbesondere eine vorbestimmte Reihenfolge nicht notwendig (z.B. beim Auftrag eines Endabnehmers der Waren), kann auf den Matrixsortierer auch ganz verzichtet werden. Die Vorsortierung findet mit Hilfe des Umlaufförderers 20 innerhalb der Zwischenspeicher 12.1 und 12.2 durch gezielten Austausch der Waren zwischen dynamischem Speicher 18 und Abrufspeicher 19 unter Einbeziehung der Rückführungsstrecken 28 bzw. 28a-c statt.

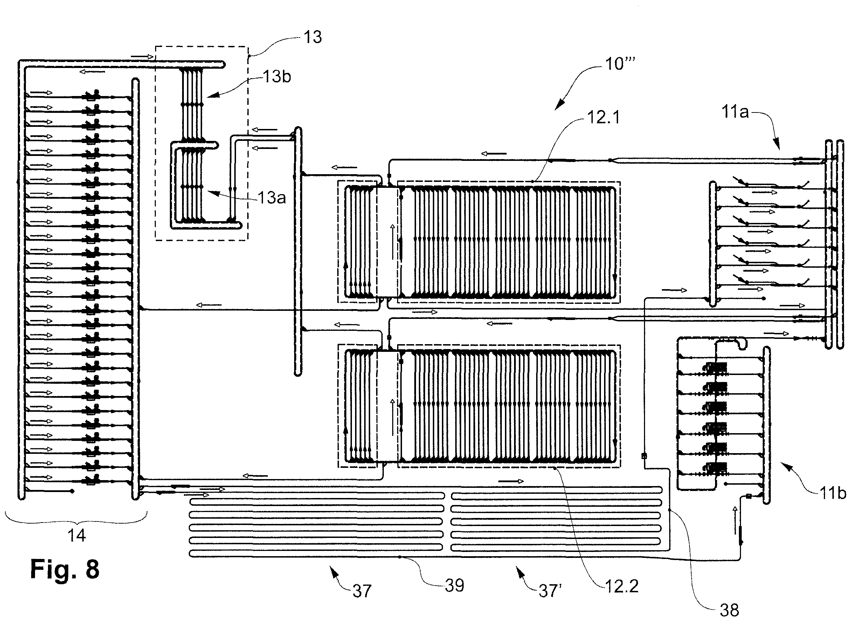

Figur 8 zeigt ein zu Figur 7 vergleichbares Ausführungsbeispiel mit einer Kommissionieranlage 10‴, die sich von der Kommissionieranlage 10" nur dadurch unterscheidet, dass in der Leer-Rückführungslinie 38 für die leeren Transportmittel (ohne die auf Kleiderbügeln hängende Ware)ebenfalls ein Leerspeicher 37' eingeplant ist.

Die Figuren 9 und 10 zeigen in verschiedenen Teilfiguren unterschiedliche Ansichten eines Zwischenspeichers der in den Figuren 3-6 gezeigten Art, der - wie bereits weiter oben erwähnt - mit Gravitationsstrecken als Speicherstrecken arbeitet. Dies führt bei dem in Figur 9 dargestellten Zwischenspeicher 12e zu einem Höhenverlauf des Umlaufförderers 20, der wie in Figur 9(d) und der in Figur 10 vergrössert dargestellten Seitenansicht gemäss Figur 9(a) zu erkennen ist, zwischen zwei unterschiedlichen Höhen h1 und h2 wechselt. Wie die Teilfigur 9(e) zeigt, sind für den Höhenwechsel in den kurzen seitlichen Förderstrecken 20b und 20d des Umlaufförderers 20 Gefällestrecken 42b und 42d eingebaut, während in den langen Förderstrecken 20a und 20c zwischen dem dynamischen Speicher 18 und dem Abrufspeicher19 Steigungsstrecken 42a und 42c eingebaut sind. Teilfiguren 9(c) und 9(f) zeigen das (lineare) Gefälle der Speicherstrecken 23 bzw. 26, während Teilfigur 9(b) die Rückführungsstrecke 28 mit dem (dafür notwendigen) Steigförderer 29 zeigt.

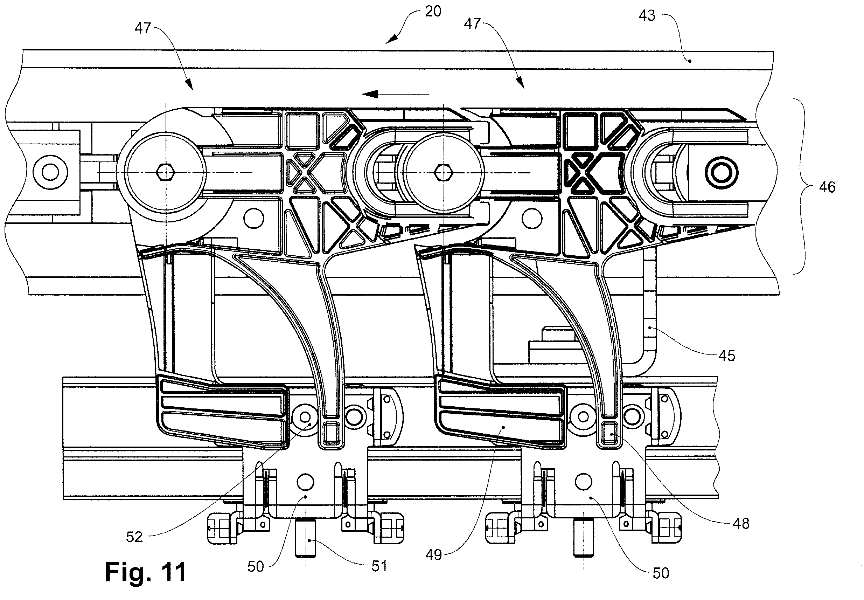

Figur 11 zeigt einen Ausschnitt eines Ausführungsbeispiels eines Umlaufförderers, wie er im Zwischenspeicher 12 bzw. 12.1, 12.2 oder 12a-e eingesetzt werden kann. Der Umlaufförderer 20 umfasst eine Förderkette 46, die mit ihren Kettengliedern 47 in einer Schiene in der mit einem Pfeil markierten Laufrichtung bzw. Förderrichtung geführt ist. Unterhalb der Schiene 43 der Förderkette 46 ist parallel mittels Tragelementen 45 eine Laufschiene 44 gehalten, in der einzelne Laufwagen 50 in Laufrichtung beweglich gelagert sind. Die Laufschiene 44 mit den Laufwagen 50 ist auch Teil der Speicherstrecken 23 und 26 in den Zwischenspeichern. Die Kettenglieder 47 der Förderkette 46 stehen über nach unten herausstehende Mitnehmer 48 und 49 und ein bolzenförmiges Eingriffselement 52 am Laufwagen 50 in Eingriff mit den Laufwagen 50, sodass eine fördernde Bewegung der Förderkette 46 eine entsprechende Bewegung der in Eingriff stehenden Laufwagen 50 bewirkt. An jedem der Laufwagen 50 ist ein Verbindungselement 51 vorgesehen, mittels dessen beispielsweise eine Transporttasche oder ein Kleiderbügel am Laufwagen 50 hängend befestigt werden kann.

Figur 12 zeigt dazu einen beispielhaften Laufwagen 50 eines Umlaufförderers gemäss Figur 11 mit angehängter Transporttasche 55. Die Transporttasche 55 hängt an einem Tragbügel 54, der in der Mitte als Aufhänger ausgebildet ist und durch eine Öse 53 am Laufwagen 50 geht, die aufgrund ihrer räumlichen Ausformung das stabile Hängen der Tragetasche sowohl quer als auch parallel zur Längsrichtung der Laufschiene 44 ermöglicht.

## Patentansprüche

1. Kommissionieranlage (10,10',10",10"') zum Kommissionieren von unterschiedlichen, insbesondere hängend transportierbaren Waren, welche Kommissionieranlage (10, 10', 10", 10‴) wenigstens eine Aufgabestation (11) mit einer Mehrzahl von parallel angeordneten Aufgabeplätzen (35, 36) zur Aufgabe der zu kommissionierenden Waren in die Kommissionieranlage (10, 10', 10", 10‴) sowie wenigstens eine Versandstation (14) mit einer Mehrzahl von parallel angeordneten Versandplätzen (40) zur Abgabe der kommissionierten Waren an den Versand umfasst, wobei zur Kommissionierung der Waren zwischen der Aufgabestation (11) und der Versandstation (14) wenigstens ein Zwischenspeicher (12; 12.1, 12.2; 12a-d) vorgesehen ist, wobei der wenigstens eine Zwischenspeicher (12; 12.1, 12.2; 12a-d) einen dynamischen Speicher (18) zur Zwischenspeicherung der für die Kommissionierung bereitgestellten Waren und einen dem dynamischen Speicher (18) nachgeschalteten Abrufspeicher (19) zum Speichern von aus dem dynamischen Speicher (18) ausgespeicherten und dabei vorsortierten Waren umfasst, welche innerhalb eines gemeinsamen Umlaufförderers (20) angeordnet sind und über den gemeinsamen Umlaufförderer (20) miteinander in Verbindung stehen, wobei der Umlaufförderer (20) eine Mehrzahl von Förderstrecken (20a-d) aufweist, und dass der dynamische Speicher (18) und der Abrufspeicher(19) jeweils durch eine Mehrzahl von als Stiche von vorgegebenen Förderstrecken (20a, 20c) des Umlaufförderers (20) abgehenden Speicherstrecken (23, 26) gebildet werden, die jeweils einen Eingang und einen Ausgang aufweisen, und dass die Speicherstrecken (23, 26) jeweils mit dem Eingang an eine erste Förderstrecke (20a bzw. 20c) und mit dem Ausgang an eine zweite Förderstrecke (20c bzw. 20a) angeschlossen sind, wobei die Förderrichtungen der ersten (20a bzw. 20c) und zweiten Förderstrecke (20c bzw. 20a) dabei entgegengesetzt sind und dass jede der Speicherstrecken (23, 26) eingangsseitig über eine betätigbare Ausfahrweiche (22, 25) und ausgangsseitig über eine betätigbare Einfahrweiche (24, 27) an die zugehörigen Förderstrecken (20a, 20c) des Umlaufförderers (20) angeschlossen ist, **dadurch gekennzeichnet, dass** die Speicherstrecken (23, 26) jeweils als Gravitationsstrecken ausgebildet sind, die vom Eingang zum Ausgang ein Gefälle aufweisen, und auf denen sich die geförderten Waren aufgrund der Schwerkraft selbsttätig vom Eingang zum Ausgang bewegen.

2. Kommissionieranlage nach Anspruch 1, **dadurch gekennzeichnet, dass** zwischen dem Zwischenspeicher (12; 12.1, 12.2; 12a-d) und der Versandstation (14) zum weiteren Sortieren ein Matrixsortierer (13) angeordnet ist.

3. Kommissionieranlage nach Anspruch 1, **dadurch gekennzeichnet, dass** der Umlaufförderer (20) in zwei Bereiche (UF1, UF2) unterteilt ist, dass der dynamische Speicher (18) in einem der beiden Bereiche (UF1, UF2) und der Abrufspeicher(19) in dem anderen der beiden Bereiche (UF1, UF2) angeordnet sind, und dass für den Transport der Waren vom dynamischen Speicher (18) zum Abrufspeicher(19) der Umlaufförderer (20) vorgesehen ist.

4. Kommissionieranlage nach Anspruch 1, **dadurch gekennzeichnet, dass** die zu kommissionierenden Waren zur Zwischenspeicherung und Vorsortierung zwischen den beiden Bereichen (UF1, UF2) des Umlaufförderers (20) über eine Zuführlinie (30) in den Umlaufförderer (20) eingebbar und dort auch wieder über eine Abführlinie (31) aus dem Abrufspeicher (19) vorsortiert entnehmbar sind.

5. Kommissionieranlage nach Anspruch 1, **dadurch gekennzeichnet, dass** am Ausgang des dynamischen Speichers (18) zum Abrufspeicher (19) hin wenigstens eine Rückführungsstrecke (18; 18a-c) mit einer zugehörigen Ausfahrweiche (57; 57a,b) vorgesehen ist, über welche Waren auf dem Weg vom dynamischen Speicher (18) zum Abrufspeicher (19) wahlweise von der zweiten Förderstrecke (20c) zur ersten Förderstrecke (20a) zurückbefördert werden können.

6. Kommissionieranlage nach Anspruch 1, **dadurch gekennzeichnet, dass** der Umlaufförderer (20) einen Hängeförderer umfasst und vorzugsweise die zu kommissionierenden Waren im Umlaufförderer (20) an einzelnen Laufwagen (50) hängend entlang einer Laufschiene (44) transportiert werden, wobei die Laufwagen (50) im Umlaufförderer (20) durch eine parallel zur Laufschiene (44) in einer eigenen Schiene (43) geführte, angetriebene Förderkette (46) bewegt werden, die mit den Laufwagen (50) in lösbarem Eingriff steht.

7. Kommissionieranlage nach Anspruch 1, **dadurch gekennzeichnet, dass** in der Kommissionieranlage (10') mehrere parallel arbeitende Zwischenspeicher (12.1, 12. 2) vorgesehen sind.

8. Kommissionieranlage nach Anspruch 6, **dadurch gekennzeichnet, dass** eine Rückführung (17) der nicht mit Waren beaufschlagten Laufwagen (50) von der Versandstation (14) zur Aufgabestation (11) vorgesehen ist und dass vorzugsweise in der Rückführung (17) wenigstens ein Leerspeicher (37, 37') für die nicht mit Waren beaufschlagten Laufwagen (50) vorgesehen ist.

9. Kommissionieranlage nach Anspruch 1, **dadurch gekennzeichnet, dass** für den Betrieb der Kommissionieranlage (10,10',10",10‴) eine Steuerung (56) vorgesehen ist, welche nach Maßgabe eingehender Aufträge die entsprechenden Waren pro Auftrag zusammenstellt und in zusammengestellter Form zu den Versandplätzen (40) in der Versandstation (14) leitet.

10. Verfahren zum Betrieb einer Kommissionieranlage nach einem der Ansprüche **dadurch gekennzeichnet, dass** die zu einer Mehrzahl von Aufträgen gehörenden Waren zunächst in den dynamischen Speicher (18) des wenigstens einen Zwischenspeichers (12; 12.1, 12.2; 12a-d) eingespeichert, dann in den Abrufspeicher (19) vorsortiert und anschließend an die einzelnen Versandplätze (40) in der Versandstation (14) übergeben werden, sodass alle zu einem Auftrag gehörenden Waren am jeweiligen Versandplatz (40) vorliegen.

11. Verfahren nach Anspruch 10, **dadurch gekennzeichnet, dass** die Waren auf dem Weg vom
dynamischen Speicher (18) zum Abrufspeicher (19) vorsortiert werden, wobei vorzugsweise zum Vorsortieren die aus dem dynamischen Speicher (18) kommenden Waren wahlweise in den dynamischen Speicher (18) zurückgeführt oder zum Abrufspeicher (19) weiterbefördert werden.

12. Verfahren nach Anspruch 11, **dadurch gekennzeichnet, dass** die wahlweise
Zurückführung der Waren in den dynamischen Speicher (18) über wenigstens eine Rückführungsstrecke (28; 28a-c) erfolgt, die über eine steuerbare Ausfahrweiche (57; 57a,b) an den Umlaufförderer (20) angeschlossen ist.

## Claims

1. An order-picking installation (10, 10', 10", 10‴) for the order-picking of different goods, in particular goods that are capable of being transported in a suspended state, said order-picking installation (10, 10', 10", 10‴) comprising at least one supply station (11) having a plurality of supply locations (35, 36) which for supplying the goods to be order-picked to the order-picking installation (10, 10', 10", 10‴) are disposed in parallel, as well as at least one dispatch station (14) having a plurality of dispatch locations (40) which for dispensing the order-picked goods for dispatch are disposed in parallel, wherein at least one temporary store (12; 12.1, 12.2; 12a-d) is provided for order-picking the goods between the supply station (11) and the dispatch station (14), wherein the at least one temporary store (12; 12.1, 12.2; 12a-d) has a dynamic store (18) for temporarily storing the goods provided for the order-picking, and a standby store (19), downstream of the dynamic store (18), for storing goods which are retrieved from the dynamic store (18) and thereby pre-sorted and which are disposed within a common continuous conveyor (20) and are connected to each other by way of the common continuous conveyor (20), wherein the continuous conveyor (20) comprises a plurality of conveyor sections (20a-d), and in that the dynamic store (18) and the standby store (19) are in each case formed by a plurality of storage sections (23, 26) which as branches depart from predefined conveyor sections (20a, 20c) of the continuous conveyor (20), which comprise in each case one entry and one exit, and in that the storage sections (23, 26) by way of the entry are in each case connected to a first conveyor section (20a, or 20c, respectively), and by way of the exit are in each case connected to a second conveyor section (20c, or 20a, respectively), wherein the conveying directions of the first (20a respectively 20c) and the second (20c respectively 20a) conveyor section are mutually opposed and in that each of the storage sections (23, 26) are connected to the associated conveyor sections (20a, 20c) of the continuous conveyor (20) at the entry side by way of an activatable egress turnout (22, 25) and at the exit by way of an activatable access turnout (24, 27), **characterized in that** the storage sections (23, 26) are in each case configured as gravity sections which comprise a gradient from the entry to the exit, and on which the conveyed goods by virtue of gravity move in a self-acting manner from the entry to the exit.

2. The order-picking installation as claimed in claim 1, **characterized in that** a matrix sorting unit (13) for further sorting is disposed between the temporary store (12; 12.1, 12.2; 1 2a-d) and the dispatch station (14).

3. The order-picking installation as claimed in claim 1, **characterized in that** the continuous conveyor (20) is sub-divided into two regions (UF1, UF2), **in that** the dynamic store (18) is disposed in one of the two regions (UF1, UF2), and the standby store (19) is disposed in the other of the two regions (UF1, UF2), and **in that** the continuous conveyor (20) is provided for transporting the goods from the dynamic store (18) to the standby store (18).

4. The order-picking installation as claimed in claim 1, **characterized in that** the goods to be order-picked for temporary storage and pre-sorting between the two regions (UF1, UF2) of the continuous conveyor (20) by way of an infeed line (30) are capable of being fed into the continuous conveyor (20), and there by way of an outfeed line (31) are also again capable of being retrieved in a pre-sorted state from the standby store (19).

5. The order-picking installation as claimed in claim 1, **characterized in that** at least one return section (18; 18a-c) having an associated egress turnout (57; 57a) is provided at the exit of the dynamic store (18) toward the standby store (19), goods in transit from the dynamic store (18) to the standby store (19) by way of said return section (18; 18a-c) being able to be selectively conveyed from the second conveyor section (20c) back to the first conveyor section (20a).

6. The order-picking installation as claimed in claim 1, **characterized in that** the continuous conveyor (20) comprises an overhead conveyor and **in that** the goods to be order-picked in the continuous conveyor (20) are preferably transported in a suspended manner on individual carriages (50) along a running rail (44), and **in that** the carriages (50) in the continuous conveyor (20) are moved by a driven conveyor chain (46) which so as to be parallel with the running rail (44) is guided in a dedicated rail (43) and which releasably engages with the carriages (50).

7. The order-picking installation as claimed in claim 1, **characterized in that** a plurality of temporary stores (12.1, 12.2) operating in parallel are provided in the order-picking installation (10').

8. The order-picking installation as claimed in claim 6, **characterized in that** a return (17) of the carriages (50) not impinged with goods from the dispatch station (14) to the supply station (11) is provided and **in that** preferably at least one empties store (37, 37') for the carriages (50) not impinged with goods is provided in the return (17) .

9. The order-picking installation as claimed in claim 1, **characterized in that** a controller (56) is provided for the operation of the order-picking installation (10, 10', 10", 10‴), said controller (56) assembling the respective goods per order as stipulated by the incoming orders, and directing said goods in the assembled form to the dispatch locations (40) in the dispatch station (14).

10. A method for operating an order-picking installation as claimed in one of claims 1 to 9, **characterized in that** the goods associated with a plurality of orders are first stored in the dynamic store (18) of the at least one temporary store (12; 12.1, 12.2; 12a-d), then pre-sorted into the standby store (19), and subsequently transferred to the individual dispatch locations (40) in the dispatch station (14) such that all goods associated with one order are present at the respective dispatch location (40).

11. The method as claimed in claim 10, **characterized in that** the goods are pre-sorted when in transit from the dynamic store (18) to the standby store (19), wherein preferably the goods which for pre-sorting emanate from the dynamic store (18) are selectively returned to the dynamic store (18) or conveyed onward to the standby store (19).

12. The method as claimed in claim 11, **characterized in that** the selective returning of the goods to the dynamic store (18) takes place by way of at least one return section (28; 28a-c) which by way of a controllable egress turnout (57; 57a,b) is connected to the continuous conveyor (20).

## Revendications

1. Installation de préparation de commandes (10, 10', 10'', 10‴) pour la préparation de commandes de différentes marchandises, en particulier de marchandises pouvant être transportées à l'état suspendu, ladite installation de préparation de commandes (10, 10', 10", 10‴) comprenant au moins une station de remplissage (11) ayant une pluralité du places de remplissage (35, 36) qui sont disposés en parallèle pour fournir les marchandises à préparer à l'installation de préparation des commandes (10, 10', 10", 10‴), ainsi qu'au moins une station d'expédition (14) comportant plusieurs places d'expédition (40) qui sont disposés en parallèle pour distribuer les marchandises préparées pour l'expédition, dans lequel au moins un stockage intermédiaire (12 ; 12.1, 12.2 ; 12a-d) est prévu pour la préparation des commandes entre la station de remplissage (11) et la station d'expédition (14), dans lequel au moins un magasin temporaire (12 ; 12.1, 12.2 ; 12a-d) comporte un magasin dynamique (18) pour le stockage temporaire des marchandises fournies pour la préparation des commandes, et un magasin de réserve (19), en aval du magasin dynamique (18), pour le stockage des marchandises qui sont extraites du magasin dynamique (18) et donc pré-triées, et qui sont disposées à l'intérieur d'un convoyeur à circulation commun (20) et reliées les unes aux autres par l'intermédiaire du convoyeur à circulation commun (20), le convoyeur à circulation (20) comportant plusieurs sections de convoyeur (20a-d), et en ce que le magasin dynamique (18) et le magasin de réserve (19) sont chacun formés par une pluralité de sections de stockage (23, 26) qui, en tant que branches, partent de sections de transport pré-définies (20a, 20c) du convoyeur à circulation (20), qui comprennent chacune une entrée et une sortie, et en ce que les sections de stockage (23, 26) par l'entrée sont chacune reliées à une première section de transport (20a, ou 20c, respectivement), et par la sortie sont dans chaque cas reliées à une deuxième section de convoyeur (20c, ou 20a, respectivement), dans laquelle les directions de transport de la première (20a respectivement 20c) et de la deuxième (20c respectivement 20a) section de convoyeur sont mutuellement opposées et dans laquelle chacune des sections de stockage (23, 26) est reliée aux sections de convoyeur associées (20a, 20c) du convoyeur à circulation (20) à l'entrée au moyen d'un aiguillage de sortie activable (22, 25) et à la sortie au moyen d'un aiguillage d'accès activable (24, 27), **caractérisées en ce que** les sections de stockage (23, 26) sont dans chaque cas configurées comme des sections de gravité qui comprennent une pente de l'entrée à la sortie, et sur lesquelles les marchandises transportées se déplacent en vertu de la gravité de manière autonome de l'entrée à la sortie.

2. Installation de préparation de commandes selon la revendication 1, **caractérisée par le fait qu'**une unité de tri matriciel (13) pour un tri supplémentaire est disposée entre le magasin temporaire (12 ; 12.1, 12.2 ; 12a-d) et la station d'expédition (14).

3. Installation de préparation de commandes selon la revendication 1, **caractérisée par le fait que** le convoyeur à circulation (20) est subdivisé en deux régions (UF1 , UF2), que le magasin dynamique (18) est disposé dans l'une des deux régions (UF1, UF2) et que le magasin de réserve (19) est disposé dans l'autre des deux régions (UF1, UF2), et **par le fait que** le convoyeur à circulation (20) est prévu pour transporter les marchandises du magasin dynamique (18) au magasin de réserve (18).

4. Installation de préparation de commandes selon la revendication 1, **caractérisée par le fait que** les marchandises à préparer en vue d'un stockage temporaire et d'un pré-tri entre les deux zones (UF1, UF2) du convoyeur à circulation (20) au moyen d'une ligne d'alimentation (30) peuvent être introduites dans le convoyeur à circulation (20) et, au moyen d'une ligne de sortie (31), peuvent également être récupérées dans un état de pré-tri à partir du magasin de réserve (19).

5. Installation de préparation de commandes selon la revendication 1, **caractérisée par le fait qu'**au moins une section de retour (18 ; 18a-c) ayant un aiguillage de sortie associé (57 ; 57a) est prévue à la sortie du magasin dynamique (18) vers le magasin de réserve (19), les marchandises en transit du magasin dynamique (18) vers le magasin de réserve (19) par le biais de ladite section de retour (18 ; 18a-c) pouvant être sélectivement transportées de la deuxième section de convoyeur (20c) vers la première section de convoyeur (20a).

6. Installation de préparation de commandes selon la revendication 1, **caractérisée par le fait que** le convoyeur à circulation (20) comprend un convoyeur suspendu et **par le fait que** les marchandises à préparer dans le convoyeur à circulation (20) sont de préférence transportées de manière suspendue sur des chariots individuels (50) le long d'un rail de roulement (44), et que les chariots (50) du convoyeur à circulation (20) sont déplacés par une chaîne de convoyeur entraînée (46) qui, pour être parallèle au rail de roulement (44), est guidée dans un rail dédié (43) et qui s'engage de manière amovible avec les chariots (50).

7. Installation de préparation de commandes selon la revendication 1, **caractérisée par le fait que** plusieurs magasins temporaires (12.1, 12.2) fonctionnant en parallèle sont prévus dans l'installation de préparation de commandes (10').

8. Installation de préparation de commandes selon la revendication 6, **caractérisée par le fait qu'**un retour (17) des chariots (50) non chargés de marchandises de la station d'expédition (14) à la station de remplissage (11) est prévu et en ce que, de préférence, au moins un magasin vide (37, 37') pour les chariots (50) non chargés de marchandises est prévu dans le retour (17).

9. Installation de préparation de commandes selon la revendication 1, **caractérisée par le fait qu'**un contrôleur (56) est prévu pour le fonctionnement de l'installation de préparation de commandes (10, 10', 10", 10‴), ledit contrôleur (56) assemblant les marchandises respectives par commande comme stipulé par les commandes entrantes, et dirigeant lesdites marchandises sous la forme assemblée vers les places d'expédition (40) dans la station d'expédition (14).

10. Méthode d'exploitation d'une installation de préparation de commandes selon l'une des revendications 1 à 9, **caractérisé par le fait que** les marchandises associées à une pluralité de commandes sont d'abord stockées dans le magasin dynamique (18) d'au moins un magasin temporaire ( 12 ; 12.1, 12.2 ; 12a-d), puis pré-triées dans le magasin de réserve (19), et ensuite transférées vers les différents places d'expédition (40) dans la station d'expédition (14) de sorte que toutes les marchandises associées à une commande soient présentes à l'emplacement d'expédition respectif (40).

11. Méthode selon la revendication 10, **caractérisée par le fait que** les marchandises sont pré-triées lorsqu'elles sont en transit entre le magasin dynamique (18) et le magasin de réserve (19), de préférence les marchandises qui doivent être pré-triées à partir du magasin dynamique (18) sont renvoyées sélectivement au magasin dynamique (18) ou acheminées vers le magasin de réserve (19).

12. Méthode selon la revendication 11, **caractérisé par le fait que** le retour sélectif des marchandises vers le magasin dynamique (18) s'effectue au moyen d'au moins une section de retour (28 ; 28a-c) qui, au moyen d'un aiguillage de sortie contrôlable (57 ; 57a,b), est reliée au convoyeur à circulation (20).
